# EUROPÄISCHE PATENTSCHRIFT

(11) **EP 1 030 794 B1**
(45) Veröffentlichungstag und Bekanntmachung des Hinweises auf die Patenterteilung: **14.08.2002**
(21) Anmeldenummer: 98963347.4
(22) Anmeldetag: 11.11.1998
(51) Int. Cl.: B60R 21/00

(54) **GURTABWICKELMESSVORRICHTUNG**
DEVICE FOR MEASURING THE UNWINDING OF THE SEAT BELT
DISPOSITIF DE MESURE DU DEROULEMENT DE LA CEINTURE DE SECURITE

(30) Priorität: 11.11.1997 DE 19749855
(43) Veröffentlichungstag der Anmeldung: 30.08.2000
(73) Patentinhaber: SIEMENS AKTIENGESELLSCHAFT, 80333 München (DE)
(72) Erfinder: BAUER, Hans-Peter, D-93047 Regensburg (DE); SWART, Marten, D-93083 Obertraubling (DE); POPP, Peter, D-93049 Regensburg (DE); DIRMEYER, Josef, D-92439 Bodenwöhr (DE); FRISCH, Markus, D-92421 Schwandorf (DE); SCHMIDT, Harald, D-93049 Regensburg (DE)
(86) Internationale Anmeldenummer: DE9803326
(87) Internationale Veröffentlichungsnummer: WO9924291

(56) Entgegenhaltungen:
- EP-A- 0 689 967
- EP-A- 0 798 176
- WO-A-94/22693
- DE-A- 2 914 643
- DE-A- 4 023 109
- FR-A- 2 734 529
- FR-A- 2 755 082
- GB-A- 2 236 419
- US-A- 5 413 378
- US-A- 5 501 293

## Beschreibung

Die Erfindung betrifft eine Gurtabwickelmessvorrichtung nach dem Oberbegriff des Patentanspruchs 1.

Sicherheitsgurte und Airbags gehören inzwischen zur Standardsicherheitsausrüstung von Kraftfahrzeugen. Für eine optimale Schutzwirkung und die Vermeidung von durch das Aufblasen des Airbags entstehenden Verletzungen ist es vorteilhaft, den Abstand zwischen dem Oberkörper einer auf einem Fahrzeugsitz mittels eines ihre Schulter übergreifenden Sicherheitsgurtes angeschnallten Person und einer vor dem Sitz angeordneten Airbag-Einheit zu kennen. Bei bekanntem Abstand können der Zeitpunkt des Auslösens des Airbags und/oder die Aufblasgeschwindigkeit entsprechend angepasst werden, so dass einerseits keine Verletzungsgefahr für die zu schützende Person aufgrund zu starken Aufblasens des Airbags besteht und andererseits eine optimale Schutzwirkung gewährleistet ist. Zur Bestimmung der Insassenposition ist es bekannt, Sensoren zu verwenden, die im Armaturenbrett oder im Dach des Fahrzeugs montiert sind und beispielsweise mittels Infrarot-Abstandsmessung die Position der Person relativ zur Airbag-Einheit feststellen. Solche Sensoren erfordern zusätzlichen Bauraum an Stellen, wo er kaum zur Verfügung steht, und zusätzlichen Verkabelungsaufwand. Für einwandfreie Messergebnisse ist die Positionierung mehrerer Sensoren erforderlich.

Eine gattungsgemäße Gurtabwickelmeßvorrichtung ist aus der GB 2 236 419 A bekannt. Hier wird die abgewickelte Gurtlänge zur Bestimmung der Insassenposition verwendet. Dabei umfaßt die Gurtabwickelmeßvorrichtung einen Sensor sowie magnetische Elemente im Gurt, die durch den Sensor erkannt werden.

Aus der FR-A-2 734 529 ist eine Einrichtung für den Insassenschutz bekannt, bei der die Insassenposition u. a. mit Hilfe eines Sensors für die abgewickelte Gurtlänge sowie mit Hilfe eines Sensors für die Fahrzeugsitzposition ermittelt wird.

Der Erfindung liegt die Aufgabe zugrunde, eine Gurtabwickelmessvorrichtung anzugeben, die einfach aufgebaut ist.

Die Erfindungsaufgabe wird mit den Merkmalen des Anspruchs 1 gelöst.

Zur Bestimmung des Abstandes zwischen dem Oberkörper und der Airbag-Einheit wird die Länge gemessen, um die der von der Person angelegte Sicherheitsgurt gegenüber einer Bezugslage abgewickelt ist. Die Bezugslage kann beispielsweise die voll aufgerollte Ruhelage des Sicherheitsgurtes sein oder die bei angeschnallter Person am weitesten aufgerollte Lage, die der mit dem Rücken an der Sitzlehne anliegenden Stellung der Person entspricht. Die letztgenannte Lage kann von dem System gelernt werden, indem bei angeschnalltem Gurt die am wenigsten abgerollte Lage des Gurtes erfasst und gespeichert wird. Je weiter der Gurt abgewickelt ist, umso weiter ist der Oberkörper der Person von der Rücklehne des Fahrzeugssitzes entfernt, so dass bei bekanntem Abstand zwischen der Rücklehne des Fahrzeugsitzes und der Airbag-Einheit der Abstand zwischen dem Oberkörper der Person und der Airbag-Einheit bestimmt werden kann. Es werden somit keine gesonderten Sensoren benötigt, die die Person erfassen und dazu notwendigerweise mit einem Messsignal beaufschlagen, sondern eine Gurtabwickelmeßvorrichtung, die mit geringem Aufwand an Sensorik möglich ist.

Die Gurtabwickelmessvorrichtung kann nicht ausschließlich für das vorgenannte Verfahren verwendet werden sondern auch für andere Anwendungen.

Die Ansprüche 2 und 3 sind auf unterschiedliche Ausführungsformen der erfindungsgemäßen Messvorrichtung gerichtet.

Die Erfindung wird im folgenden anhand schematischer Zeichnungen beispielsweise und mit weiteren Einzelheiten erläutert.

Es stellen dar:
- Fig. 1: eine Skizze einer angeschnallten Person mit Air-bag-Einheit, Sensorik und Steuergerät und
- Fig. 2: eine Skizze zur Erläuterung einer Messvorrichtung zur Erfassung der Länge des abgewickelten Gurtes.

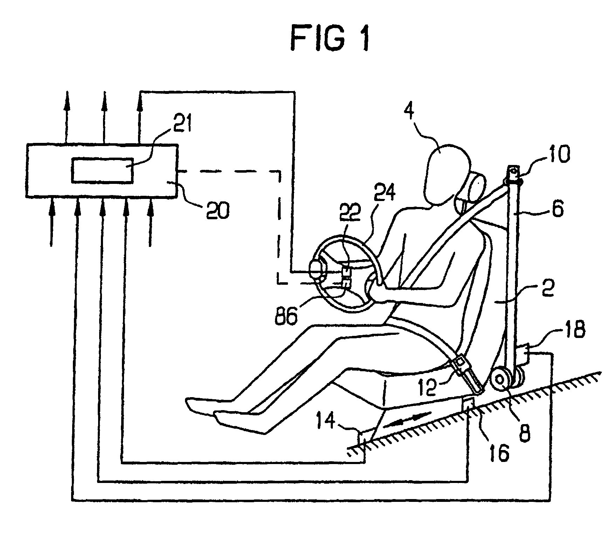

Fig. 1 zeigt eine auf dem Fahrersitz 2 eines Kraftfahrzeugs sitzende Person 4, die mittels eines Sicherheitsgurtes 6 angegurtet ist. Der Sicherheitsgurt erstreckt sich von einer am Fahrzeugrahmen befestigten Wickelvorrichtung mit einer Gurtrolle 8 über einen am Pfosten B befestigten Umlenkbeschlag 10 zu einer sitzfesten Verankerung 12. Eine den Gurt verschiebbar aufnehmende Lasche (nicht sichtbar) ist unter Abrollen des Gurtes in ein in Fig. 1 nicht sichtbares Gurtschloss einsteckbar, das an der zur Fahrzeugmitte gewandten Seite des Sitzes 2 befestigt ist. Auf diese Weise sind das Becken und der Oberkörper der Person 4 vom Sicherheitsgurt 6 gehalten.

An dem Sitz 2 sind ein Sensor 14 zur Messung der Sitzstellung in Vorwärts-Rückwärtsrichtung des Fahrzeugs und ein Sensor 16 zur Erfassung des Gewichts des Sitzes 2 vorgesehen. Die Aufund Abwicklung des Sicherheitsgurtes 6 wird von einem Sensor 18 erfasst. Die Sensoren 14, 16 und 18 sind mit Eingängen eines Steuergerätes 20 verbunden, das in an sich bekannter Weise einen Mikrorechner 21 mit zugehörigen Speichern enthält. Weitere Eingänge des Steuergerätes 20 sind beispielsweise mit Verzögerungssensoren verbunden, die an unterschiedlichen Stellen des Fahrzeugs angebracht sind.

Ein Ausgang des Steuergerätes 20 ist mit einer Airbag-Einheit 22 verbunden, die sich im Lenkrad 24 des Fahrzeugs befindet. Weitere Ausgänge des Steuergerätes 20 sind mit weiteren Airbag-Einheiten, Gurtstraff-Einrichtung usw. verbunden.

Anhand der Ausgangssignale der Sensoren 14, 16 und 18 kann das Steuergerät 20 mittels eines dort gespeicherten Algorithmus den Abstand zwischen dem Oberkörper der Person 4 und der Airbag-Einheit 22 berechnen. Dabei kann der Algorithmus ein lernender Algorithmus sein, der mittels des Ausgangssignals des Sensors 18 bei angeschnallter Person die geringste abgewickelte Länge des Gurtes 6 erfasst und diese als voll an die Rückenlehne des Sitzes 2 angelehnte Position der Person 4 wertet. In dieser Position hat der Oberkörper der Person 4 den bei der jeweiligen, vom Sensor 14 erfassten Sitzstellung, maximalen Abstand von der Airbag-Einheit 22. Für das Ablegen dieser Position in einem Speicher des Steuergeräts 20 kann zusätzlich das vom Sensor 16 erfasste Gewicht der Person 4 berücksichtigt werden. Beugt sich die Person 4 nun nach vorne aus dem Sitz heraus, so verlängert sich der den Oberkörper diagonal überspannende Teil des Sicherheitsgurtes 6, wozu ein Teil des Sicherheitsgurts 6 von der Gurtrolle 8 abgewickelt wird. Diese Abwicklung wird vom Sensor 18 erfasst und im Steuergerät 20 in die Verlängerung des Gurtes und daraus hergeleitet die Verringerung des Abstandes zwischen Oberkörper der Person 4 und der Airbag-Einheit 22 umgerechnet. Auf diese Weise kann der jeweilige Abstand des Oberkörpers der Person 4 von der Airbag-Einheit 22 im Steuergerät 20 bei der Berechnung der optimalen Auslöse- und Aufblasbedingungen für den Airbag der Airbag-Einheit 22 berücksichtigt werden. Verletzungen, die durch volles Aufblasen des Airbags bei nahe daran befindlichen Personen entstehen können, werden vermieden.

Bei entsprechend aufwendiger Ausbildung des Steuergerätes 20 kann noch während eines Unfalls die Vorverlagerung einer Person beim Aufblasen berücksichtigt werden.

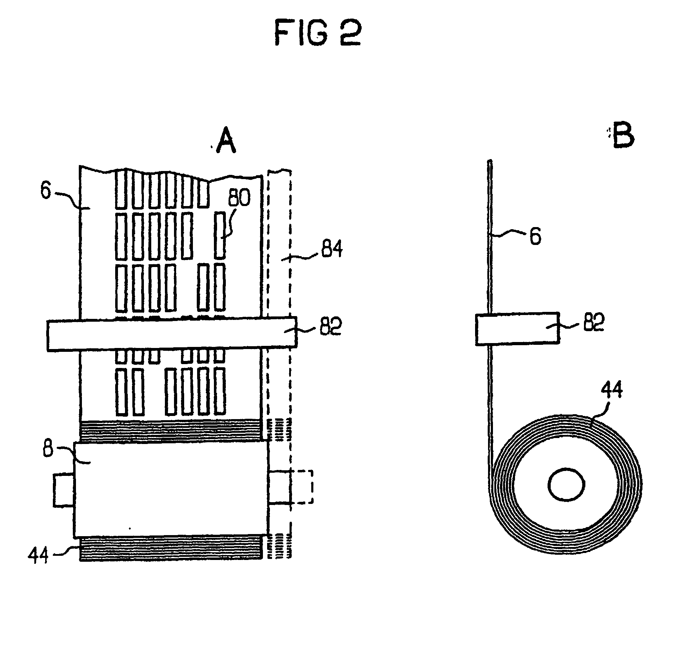

Fig. 2 stellt eine Ausführungsform einer Messvorrichtung dar, wobei Fig. 2a) eine Aufsicht auf den Sicherheitsgurt 6 und Fig. 2b) einen Querschnitt durch die Anordnung gemäß Fig. 2a) zeigt.

Wie ersichtlich, ist der Sicherheitsgurt 6 selbst mit Codierungen 80 versehen, die von einem Lesegerät 82 gelesen werden, das mit dem Steuergerät 20 verbunden ist.

Die Codierungen 80, die die augenblicklich abgewickelte Länge des Sicherheitsgurts 6 enthalten, sind magnetisierte Drähte, die in den Sicherheitsgurt 6 eingewoben sind und partiell magnetisiert sind. Wenn beispielsweise acht zueinander parallele Drähte eingewoben sind, ist ein 8-Bit-Code mit 256 Stufen möglich, der mittels Hall-Sensoren oder Impulsdrahtgebern im Lesegerät 82 abgelesen wird.

Es ist also eine magnetische Codierung aufgebracht. Das Lesegerät 82 kann auf magnetischem Weg die Codierung 80 auslesen.

Die erfindungsgemäße Gurtabwickelmessvorrichtung wurde bisher derart geschildert, dass sie alleine zur Bestimmung der Position der auf einem Sitz eines Fahrzeugs sitzenden Person herangezogen wird. Eine weitere Verwendung der erfindungsgemäßen Gurtabwickelmessvorrichtung besteht darin, dass die Gurtabwickelmessvorrichtung mit einem beispielsweise auf Ultraschall- oder Infrarotbasis arbeitenden Abstandssensor zusammenwirkt, der gemäß Fig. 1 im Lenkrad (für den Fahrersitz) oder der Schalttafel (für den Beifahrersitz) angeordnet ist und den Abstand beispielsweise des Oberkörpers einer auf dem Sitz sitzenden Person misst. Der von dem Abstandssensor 86 (in Fig. 1 gestrichelt eingezeichnet) erfasste und im Steuergerät 20 errechnete Abstand kann dadurch verfälscht werden, dass eine Person beispielsweise einen Gegenstand vor sich hält, der in das Messfeld des Abstandssensors 86 gerät. Wenn der vom Abstandssensor 86 ermittelte Abstand gering ist, ohne dass auch die Gurtabwickelmessvorrichtung eine teilweise Abwicklung des Gurtes signalisiert, so deutet dies darauf hin, dass das Messsignal des Abstandssensors 86 verfälscht ist und trotz des geringen, von dem Abstandssensor 86 signalisierten Abstandes der Airbag der Airbag-Einheit 22 voll aufgeblasen werden soll. Zeigt dagegen der Abstandssensor 86 einen geringen Abstand an und ist der Gurt 6 teilweise abgewickelt, so liegt ein außerordentlich zuverlässiges, redundantes Signal dafür vor, dass der Airbag 22 nur teilweise aufgeblasen wird, wobei dieses Aufblasen aber wegen des geringen Abstands mit sehr kleiner Verzögerung nach einem Unfall erfolgt.

## Patentansprüche

1. Gurtabwickelmeßvorrichtung mit einer federnd in Aufwickelvorrichtung vorgespannten Gurtrolle (8), von der ein Gurt (6) abwickelbar ist,
mit einer Sensoreinrichtung (18; 80, 82), die ein von der Länge des abgewickelten Gurtes (6) abhängiges Ausgangssignal erzeugt, das einem Rechner (21) zugeführt wird, bei der der Sicherheitsgurt (6) mit einer magnetischen Codierung versehen ist,
bei der die Sensoreinrichtung zum Auslesen der magnetischen Codierung ausgebildet ist,
**dadurch gekennzeichnet, daß** der Sicherheitsgurt (6) zumindest partiell magnetisierte Drähte als magnetische Codierung enthält, die in den Sicherheitsgurt eingewoben sind.

2. Gurtabwickelmeßvorrichtung nach Anspruch 1,
**dadurch gekennzeichnet,**
**daß** der Gurt (6) längs zumindest eines Teils seiner Länge mit Codemarken (80) versehen ist, die von der Sensoreinrichtung (82) erfaßt werden.

3. Gurtabwickelmeßvorrichtung nach Anspruch 1 oder Anspruch 2,
**dadurch gekennzeichnet,**
**daß** die Sensoreinrichtung einen Hall-Sensor oder einen Impulsdrahtgeber zum Auslesen der magnetischen Codierung enthält.

## Claims

1. Device for measuring the unwinding of a seatbelt with a seatbelt roller (8) which is prestressed in a sprung fashion in the winding direction and from which a seatbelt (6) can be unwound, having a sensor device (18; 80, 82) which generates an output signal which is dependent on the length of the unwound seatbelt (6) and which is fed to a computer (21), in which the seatbelt (6) is provided with magnetic coding, in which the sensor device is designed to read out the magnetic coding, **characterized in that** the seatbelt (6) contains at least partially magnetized wires as magnetic coding, which wires are woven into the seatbelt.

2. Device for measuring the unwinding of a seatbelt according to Claim 1, **characterized in that** the seatbelt (6) is provided along at least part of its length with code marks (80) which are sensed by the sensor device (82).

3. Device for measuring the unwinding a seatbelt according to Claim 1 or Claim 2, **characterized in that** the sensor device contains a Hall sensor or a pulse-wire sensor for reading the magnetic coding.

## Revendications

1. Dispositif de mesure de déroulement de ceinture muni d'une poulie pour ceinture (8) prétendue par ressorts dans le dispositif d'enroulement, à partir de laquelle poulie une ceinture (6) peut être déroulée,
d'un dispositif à capteurs (18 ; 80, 82) qui génère un signal de sortie dépendant de la longueur de la ceinture (6) déroulée, ce signal étant amené à un ordinateur (21),
dans lequel dispositif la ceinture de sécurité (6) est munie d'un codage magnétique,
dans lequel le dispositif à capteurs est formé pour lire le codage magnétique,
**caractérisé en ce que** la ceinture de sécurité (6) comprend des fils magnétisés au moins en partie comme codage magnétique, ces fils étant tissés dans la ceinture de sécurité.

2. Dispositif de mesure de déroulement de ceinture selon la revendication 1,
**caractérisé en ce que**
la ceinture (6) est munie de marques de code (80) le long d'au moins une partie de sa longueur, ces marques de code étant enregistrées par le dispositif à capteurs (82).

3. Dispositif de mesure de déroulement de ceinture selon la revendication 1 ou la revendication 2,
**caractérisé en ce que**
le dispositif à capteurs comprend un capteur de Hall ou un générateur d'impulsions pour fils pour la lecture du codage magnétique.
